(19) Europäisches Patentamt / European Patent Office / Office européen des brevets

(11) EP 1 564 227 B1

(12) EUROPEAN PATENT SPECIFICATION

(45) Date of publication and mention of the grant of the patent:
28.11.2018 Bulletin 2018/48

(51) Int Cl.:
C08F 6/00 (2006.01)     C08F 6/06 (2006.01)
C08F 6/16 (2006.01)     C08F 257/02 (2006.01)

(21) Application number: 05007817.9

(22) Date of filing: 10.04.2000

(54) **Process for the preparation of monodisperse polymer particles**

Verfahren zur Herstellung von monodispersen Polymerteilchen

Procédé pour la préparation d'un polymère avec des particules monodispersées

(84) Designated Contracting States:
**AT BE CH CY DE DK ES FI FR GB GR IE IT LI LU MC NL PT SE**

(30) Priority: **09.04.1999 GB 9908163**
**22.03.2000 GB 0007008**

(43) Date of publication of application:
**17.08.2005 Bulletin 2005/33**

(62) Document number(s) of the earlier application(s) in accordance with Art. 76 EPC:
**00919034.9 / 1 177 231**

(73) Proprietor: **Life Technologies AS**
**0309 Oslo (NO)**

(72) Inventors:
 • **Nordbo, Silje Steinbakk**
   **0454 Oslo (NO)**
 • **Pettersen, Henning**
   **2000 Lillestrom (NO)**
 • **Staale, Solveig Marie**
   **1476 Rasta (NO)**

(74) Representative: **Wöhler, Christian et al**
**Life Technologies**
**Frankfurter Straße 129 B**
**64293 Darmstadt (DE)**

(56) References cited:
   EP-A- 0 326 383     GB-A- 822 080
   GB-A- 917 925     GB-A- 932 433
   GB-A- 1 389 274     US-A- 2 673 193

 • **PATENT ABSTRACTS OF JAPAN vol. 010, no. 178 (C-355), 21 June 1986 (1986-06-21) & JP 61 026505 A (TORAY IND INC), 5 February 1986 (1986-02-05)**
 • **PATENT ABSTRACTS OF JAPAN vol. 005, no. 085 (C-057), 3 June 1981 (1981-06-03) & JP 56 030405 A (TORAY IND INC), 27 March 1981 (1981-03-27)**
 • **PATENT ABSTRACTS OF JAPAN vol. 017, no. 513 (C-1111), 16 September 1993 (1993-09-16) & JP 05 139711 A (KAO CORP), 8 June 1993 (1993-06-08)**
 • **PATENT ABSTRACTS OF JAPAN vol. 014, no. 077 (C-0688), 14 February 1990 (1990-02-14) & JP 01 294702 A (MITA IND CO LTD), 28 November 1989 (1989-11-28)**
 • **PATENT ABSTRACTS OF JAPAN vol. 011, no. 053 (C-404), 19 February 1987 (1987-02-19) & JP 61 215603 A (JAPAN SYNTHETIC RUBBER CO LTD), 25 September 1986 (1986-09-25)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This invention relates to improvements in and relating to the preparation of substantially monodisperse polymer particles.

Monodisperse polymer particles (i.e. particles with a coefficient of variation of less than 10%, preferably less than 5% and more preferably less than 3%) have been commercially available for several years and find applications in many technical fields, e.g. in pharmaceuticals, in separation processes, as toners, as filters, as spacers, etc.

Polymer beads may be produced by diffusing a monomer and a polymerization initiator (or catalyst) into polymer seeds in an aqueous dispersion. The seeds swell and following initiation of polymerization, e.g. by heating to activate the initiator, larger polymer particles are produced. The maximum volume increase due to swelling and polymerization is about x5 or less. The late Professor John Ugelstad found that the capacity of the seeds to swell could be increased to a volume increase of x125 or even more if an organic compound with relatively low molecular weight and low water solubility is diffused into the seeds before the bulk of the monomer is used to swell the seeds. The effect is based on entropy and not particularly in the chemical nature of the organic compound. Conveniently the polymerization initiator may be used for this purpose. Organic solvents, e.g. acetone or a relatively small portion of the monomer, may be used to enhance diffusion of the organic compound into the seeds. This "Ugelstad polymerization process", which is described for example in EP-B-3905 (Sintef) and US-A-4530956 (Ugelstad), may be used to produce monodisperse particles, if necessary carrying out several swelling and polymerization stages to reach the desired particle size.

WO 92/16581 (Cornell Research Foundation) also describes the preparation of monodisperse particles, particularly macroporous polymer beads. The process described uses a three phase emulsion containing soluble polymer particles, a monomer phase, and water. The three phase emulsion also includes an emulsifier and a suspension stabiliser. The polymer particles undergo swelling absorbing the monomer which is then polymerized. In this process the soluble polymer seed particles act as both shape/size regulators and as a porogen. The initial (i.e. before swelling) particles have a diameter of from about 0.5 to 10 $\mu$m, 2 to 5 $\mu$m being most preferred, and are produced by conventional techniques, such as emulsion or dispersion polymerization.

In a simplified version of the Ugelstad process the enhanced capacity for swelling may be achieved simply by the use of oligomeric seed particles, e.g. where the oligomer weight average molecular weight corresponds to up to 50 monomer units or up to 5000 Dalton.

The processes described in EP-B-3905 and US-A-4530956 and the simplified Ugelstad process are relatively complex and inefficient. The processes described in WO 92/16581 do not especially improve upon those disclosed in EP-B-3905 and US-A-4530956. The essence of WO 92/15681 would appear to be the production of macroporous polymer beads of substantially uniform size, the macroporosity being achieved through extraction of the (initially) soluble polymer from the resultant insoluble expanded beads. It is well known in the art that addition of steric stabilizers to dispersion polymerizations of polymer seeds can be useful in controlling size of beads; this feature of WO 92/16581, therefore, appears to represent nothing more than the arbitrary introduction of an obvious and well-known advantageous process feature into the process of the invention.

JP61026505 provides black particles by treating particles of an acrylonitrile polymer at a specific temperature. The particles are suitable for use as a pigment, an absorbent, a filler, an electrical conductive material and a material for medical diagnostics. The black particles can be produced by oxidizing particles of an acrylonitrile polymer at 150 -300°C, and heating the product at ≥450°C. The acrylonitrile polymer may be an acrylonitrile copolymer having an acrylonitrile content of ≥85mol%, preferably ≥90mol%, as well as the homopolymer of acrylonitrile. The polymer particles may be produced by emulsion polymerization or suspension polymerization, however, particles produced by precipitation polymerization (preferably precipitation polymerization from ethyl propionate or n-butyl acetate solution) are preferable.

JP56030405 provides a method for preparing hydrophilic, water-soluble fine particles. The method provides the polymerization of an addition-polymerisable monomer mixture containing glycidyl methacrylate and a crosslinkable monomer in an organic solvent, such as ethyl acetate or butyl acetate, followed by the hydrolysis of the precipitated fine polymer particle.

US 2673193 relates to a process for coagulating polymer dispersions, more particularly to a process for coagulating polymer lattices prepared in a true aqueous emulsion. US 2673193 specifically provides a process for coagulating stable dispersions of polymers of unsaturated organic compounds prepared in a true aqueous emulsion, which comprises adding to the aqueous emulsion certain organic substances in an amount which is sufficient to form a separate organic phase and heating the resulting mixture, preferably at the boiling temperature of the mixture.

There is a need for improvements to all these processes, in particular improvements which make it easier to produce monodisperse polymer particles with different chemical or physical characterstics.

It is important to use a polymeric steric stabilizer in the aqueous phase in order to avoid agglomeration of desired-sized particles and formation of undersized particles in the polymerization stage. Surprisingly it has been found that where the swelling generates particles below 25$\mu$m in size undersized particle formation is essentially avoided by the use of polyvinylpyrrolidone (PVP) as a steric stabilizer whereas where the swelling generates

particles above $5\mu$m in size cellulose ethers function effectively as steric stabilizers. While PVP can be used to stabilize particles above $16\mu$m it is especially preferred for use with particles up to $16\mu$m.

The present invention provides a method of cleaning monodisperse polymer particles comprising contacting said monodisperse polymer particles with butyl acetate. Preferably, the particles are produced by swelling a seed polymer (or oligomer) particle in aqueous dispersion and polymerizing a monomer within the swollen seed particles. Preferably, the method comprises washing or rinsing said particles with butyl acetate. Preferably, the method further comprises removing linear polymers.

Thus viewed from one aspect the invention provides a process for the preparation of monodisperse polymer particles which process comprises:

1) either
(a) forming an aqueous dispersion comprising (i) monodisperse swellable seed polymer (or oligomer) particles, (ii) droplets comprising an organic compound (e.g. a polymerization initiator) with a molecular weight below 5000 Dalton and a water solubility at 25°C of less than $10^{-2}$ g/L, (iii) an anionic surfactant, and, optionally, (iv) an organic solvent in which said organic compound is soluble,
and (b) allowing said organic compound to diffuse into said seed particles or (a) forming an aqueous dispersion comprising monodisperse swellable seed oligomer particles and preferably an anionic surfactant;
2) contacting the aqueous dispersion of seed particles with a monomer which, where said organic compound is present, is at least ten times more water soluble than said organic compound, and if required a water-soluble steric stabilizer, if required a porogen, and if required a polymerization initiator, and allowing said monomer to diffuse into said seed particles to form an aqueous dispersion of swollen seed particles; and
3) initiating polymerization of said monomer in an aqueous dispersion of swollen seed particles, characterised in that
where the mode diameter of said swollen particles is greater than $5\mu$m then the aqueous phase of said aqueous dispersion of swollen seed particles during polymerization further contains as a steric stabilizer a water soluble cellulose ether
or in that where said mode diameter of said swollen particles is in the range 1 to $25\mu$m the aqueous phase of said aqueous dispersion of swollen seed particles during polymerization further contains as a steric stabilizer polyvinylpyrrolidone.

Alternatively, the process feature 2) above may instead involve contacting the aqueous dispersion of seed particles with a monomer which, where said organic compound is present, is at least ten times more water soluble than said organic compound, and allowing said monomer to diffuse into said seed particles to form an aqueous dispersion of swollen seed particles, and if required adding a water-soluble steric stabilizer, if required adding a porogen, and if required adding a polymerization initiator.

In the above process, the mode diameter of said swollen particles is preferably more than $15\mu$m where the aqueous phase of said aqueous dispersion of swollen seed particles during polymerization further contains as a steric stabilizer a water soluble cellulose ether.

Where water soluble cellulose ethers are used when forming the swollen particles, the mode diameter of the swollen particles will preferably be less than 200 $\mu$m.

The PVP preferably has a weight average molecular weight of 10 to 2000 kD, more preferably 25 to 1500 kD, especially 30 to 1000 kD. Where the swollen particles have sizes at the lower end of the 1 to $25\mu$m range it is preferred to use lower molecular weight PVP and where the swollen particles have sizes at the upper end of that range it is preferred to use higher molecular weight PVP. Thus for example 20 to 80 kD, e.g. 30 kD PVP is particularly suitable for swollen particle sizes of up to $8\mu$m while 900 to 1500 kD PVP is particularly suitable for swollen particle sizes above $8\mu$m. Examples of suitable such PVP include PVP K30 and PVP K90 (available for example from International Speciality Products and from Fluka).

Examples of suitable cellulose ethers include alkyl celluloses, preferably $C_{1-4}$-alkyl celluloses; and (hydroxyalkyl)alkyl celluloses, preferably (hydroxy-$C_{1-4}$-alkyl)$C_{1-4}$-alkyl celluloses, more preferably (hydroxy-$C_{1-4}$-alkyl)methyl celluloses. Typically, these cellulose ethers have weight average molecular weights in the range 10 to 100 kD, especially 15 to 80 kD. Such materials are available commercially in a range of different degrees of substitution and molecular weight, e.g. as Benecel MP 333C, Benecel MP 651C, Culminal MHPC 1500, Culminal MHPC 400, Walocel MK 400 PFV and Methocel K100. Cellulose ethers which generate a viscosity when in 2% aqueous solution at 21°C of 50 to 150 mPa.s are especially preferred.

In the present invention, the size increase by volume (i.e. the ratio of the volume of the swollen particles to the volume of the seed particles) is between 30 and 1000 times. It is a preferred embodiment that the corresponding ratio with regard to the increase in diameter is not less than 3.5.

It should be noted that the process steps recited above may represent the final swelling and polymerization stage or an intermediate swelling and polymerization stage in an Ugelstad polymerization process for preparing monodisperse polymer particles.

The mixture which comprises the monomer (or mixture of monomers) is preferably in the form of an aqueous dispersion when it is contacted with the polymer particles. Where a polymerization initiator is contacted with the aqueous dispersion of polymer particles this too is preferably in the form of an aqueous emulsion, preferably also containing a polymerizable or non-polymerizable organic solvent, e.g. alcohols (particularly $C_{1-4}$ alkanols), ethers (especially cyclic ethers), ketones (e.g. acetone), dialkylsulphoxides, dialkylformamides, monomers, etc. Water miscible solvents, such as acetone, are however preferred. The droplet size of both such emulsions is preferably below $5\mu$m, e.g. 0.1 to $1\mu$m, particularly 0.3 to $0.6\mu$m. This may be produced using an intensive mixer, e.g. a pressure homogenizer (such as a Gaulin homogenizer) or a rotor stator mixer. The steric stabilizer, if present, may be added in whole or in part, together with the monomer, to the aqueous dispersion of seed particles; if additional steric stabilizer is required this is preferably added in aqueous solution form. The steric stabilizer concentration in the polymerization medium is preferably 1 to 40 g/L, especially 4 to 25 g/L, for polyvinylpyrrolidone and 0.1 to 10 g/L, especially 1 to 5 g/L, for cellulose ethers.

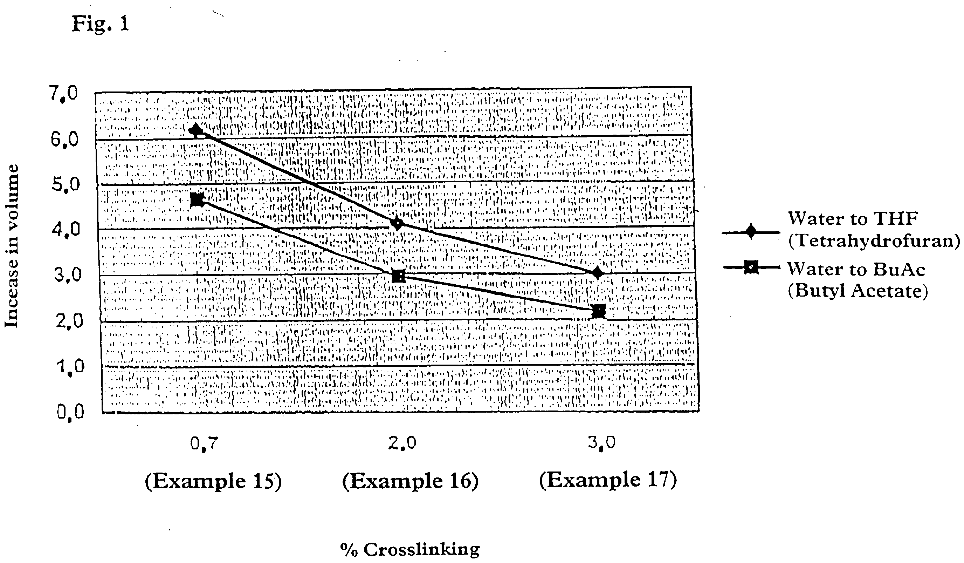

Figure 1 shows the degree of swelling (by volume) of dispersed particles produced in Examples 15-17, from water to THF and from water to butyl acetate.

In the Ugelstad polymerization process the initial substantially monodisperse seed polymer particles may conveniently be produced by emulsion polymerization. We have found that particularly suitable initial seed particles may be produced by effecting that emulsion polymerization under substantially oxygen-free conditions. Thus viewed from a further aspect the invention provides a process for the preparation of monodisperse polymer particles which comprises:

1) preparing monodisperse swellable seed particles by emulsion polymerization under substantially oxygen-free conditions;

2) where said seed particles are non-oligomeric (and optionally where they are oligomeric), (a) contacting said seed particles with an aqueous dispersion comprising an organic compound (e.g. a polymerization initiator) with a molecular weight below 5000 Dalton and a water solubility at 25°C of less than $10^{-2}$g/L, an anionic surfactant and, optionally an organic solvent in which said organic compound is soluble, and (b) allowing said organic compound to diffuse into said seed particles;

3) contacting the aqueous dispersion of seed particles with a monomer which, where said organic compound is used, is at least ten times more water soluble than said organic compound and allowing said monomer to diffuse into said seed particles to form an aqueous dispersion of swollen seed particles, and if required adding a water-soluble steric stabilizer, if required adding a porogen, and if required adding a polymerization initiator; and

4) initiating polymerization of said monomer in an aqueous dispersion containing a steric stabilizer in the continuous phase.

If desired the resulting particles may be further swollen and polymerized to obtain larger monodisperse polymer or oligomer particles. Where any of these stages produces swollen particles having sizes from 1 to $25\mu$m polyvinylpyrrolidone is preferably used as the steric stabilizer and if it produces swollen particles having sizes above $15\mu$m a cellulose ether is preferably used as the steric stabilizer. A cellulose ether may also be used as steric stabilizer where the mode diameter of said swollen particles is from 5 to 15 $\mu$m. Where the swollen particles have particle sizes below $5\mu$m, and especially below $2\mu$m, and especially where the organic compound used is a polymerization initiator, it is convenient to use as the surfactant a $C_{8-16}$ alkyl sulphate or sulphonate, especially a dodecyl sulphate, e.g. sodium dodecyl sulphate, as this serves as both stabilizer and initiator uptake promoter. Where the seed particles have mode particle diameters below $1\mu$m, the surfactant is especially preferably sodium dodecyl sulphate.

Where the monomer is an amino-functionalized monomer (or where two or more monomers are used and one comonomer is an amino functionalized monomer), it is preferred to add the initiator after the seed particles have been swollen and thus to use as the organic compound (ie. substance I of EP-B-3905) a non-initiator, e.g. a material such as dioctyladipate. For such amino monomers, the initiator is preferably an azo compound, e.g. 2,2'-azobis-(2-methylbutyronitrile) or azo-bis-dimethylvaleronitrile. For other monomers, especially vinyl monomers (e.g. styrene) and acrylic monomers, it is preferred to use a peroxide initiator (e.g. dibenzoyl peroxide, lauroyl peroxide, t-butyl-peroxybenzoate, t-butyl-peroxypivalate and, especially, dioctanoyl peroxide) and to use the initiator as the organic compound which promotes swelling of the seed particles.

Generally, it is preferred to use polymerization initiators that are activated by heat. In this way the initiator and monomer may be brought together within the swollen seed particles at a temperature below that of which polymerization occurs and the aqueous dispersion may then be heated to the temperature at which polymerization is to take place, e.g. 50 to 90°C, more generally 60 to 85°C. During the polymerization, the aqueous dispersion goes through a sticky state and the dispersion should be stirred as gently as possible while still sufficient to maintain a homogeneous dispersion.

In the final swelling and polymerization stage, it is preferred to raise the temperature, e.g. to 70 to 95°C, at the end of the polymerization stage so as to reduce the quantity of residual monomer.

Following preparation of the monodisperse polymer particles of the,desired size (which may require two or more swelling and polymerization cycles, e.g. up to 10 such cycles), the polymer particles' surfaces may be derivatised as desired, e.g. by reaction with bifunctional reagents (e.g. diamines) which react with functional groups present in monomers used in the final polymerization stage and serve to introduce the desired functional groups, e.g. amine, carboxyl, epoxy, hydroxyl, etc. Such functional groups may likewise be introduced by the use of a functionalised monomer or comonomer, e.g. glycidyl methacrylate, HEMA, MMA or aminostyrene. Such groups are advantageous as the resultant particles are particularly suitable for end uses in applications such as combinatorial chemistry, peptide synthesis, supported catalysts and chromatographic separation.

Depending on their desired end use, the monodisperse polymer particles may be coated (e.g. with metallic coatings); they may have materials, e.g. magnetic crystals, specific binding partners (e.g. antibodies, avidin or streptavidin, etc.), or catalysts bound to their surface or deposited in pores or on the surface; or they may be expanded (e.g. using blowing agents).

The swelling and polymerization stages are performed in aqueous dispersion in the presence of materials, e.g. surfactants, stabilizers, organic solvents, etc., which it is desirable to remove from the particles. Likewise, where the polymerization produces a cross-linked polymer it may be desirable to remove linear polymers or oligomers which formed the seed particles, for example to avoid leakage during use in chromatography. Generally a water-miscible organic solvent in which the cross-linked polymer is insoluble, or an aqueous solution of such a solvent, may be used for this. However it is particularly suitable to use butyl acetate in this regard in view of its surprising effectiveness in removing undesired residues from the Ugelstad polymerization process. This use forms a further aspect of the present invention. Viewed from this aspect the invention provides a method of cleaning monodisperse polymer particles, in particular particles produced by swelling a seed polymer or oligomer particle in aqueous dispersion and polymerizing a monomer within the swollen seed particles, which method comprises contacting said monodisperse polymer particles with butyl acetate, e.g. by washing or rinsing with butyl acetate or a solution thereof.

The initial polymer seed (i.e. the particles not produced by the Ugelstad swelling and polymerization technique) is preferably prepared by dispersion or emulsion polymerization, in the latter case especially preferably under substantially oxygen-free conditions (e.g. under an inert gas atmosphere, for example a noble gas such as argon, helium, etc.), and with an oxygen content in the aqueous phase of between 0 and 5 ppm, more especially between 0 and 3 ppm, preferably between 0 and 2 ppm, particularly between 0.01 and 2 ppm. This can be achieved by boiling the water before use or, more preferably by purging liquid reagents with nitrogen. When purging liquid reagents with nitrogen, the length of time required depends upon the volume to be purged. For example, when purging a 2 litre vessel, a purging time of between 1 to 50 minutes is preferred, especially preferably purging for at least 10 minutes.

The aqueous phase in the emulsion polymerization contains an anionic surfactant stabilizer, e.g. an $C_{6-16}$ alkyl sulphate such as a decylsulphate, e.g. sodium decylsulphate. This is preferably present at a concentration below its critical micelle concentration.

The unswollen initial seed preferably has a mode particle diameter in the range 0.2 to $1\mu m$, especially 0.3 to $0.7\mu m$, more especially 0.4 to $0.6\mu m$. This can be achieved by mixing monomer, water and surfactant, heating (e.g. to 80°C) and charging with initiator under vigorous stirring. The initial seeds produced by emulsion polymerization are preferably styrene polymers. Subsequent seeds may conveniently be polymeric or oligomeric.

In the process steps recited above for the processes of the invention, where the polymerization initiator is used as the organic compound (i.e. as substance I of the process of EP-B-3905) it is preferably an organic peroxide, e.g. tert-butyl peroxyneodecanoate or more especially dioctanoyl peroxide (DOP) and it is preferably formed into a fine emulsion using water, the anionic surfactant (preferably sodium dodecyl sulphate or a sulfonate) and an organic solvent, e.g. acetone. The monomer may be but preferably is not used as a solvent for the peroxide initiator; if it is used as a solvent it is preferred that only a relatively small amount of the monomer be used.

In general, emulsification is preferably effected using a high pressure mixer (e.g. a pressure homogenizer), or a rotor stator mixer, to give a mode droplet diameter in the range 0.05 to $5\mu m$, more preferably 0.05 to $0.5\mu m$, especially 0.05 to $0.3\mu m$. During emulsifications, the surfactant is preferably present above its critical micelle concentration, e.g. at a concentration of 3 to 10 g/L, more preferably 4 to 6 g/L (the critical micelle concentration for sodium dodecyl sulphate is about 2.5 g/L). However during polymerization stages, the surfactant is preferably present below its critical micelle concentration, e.g. at less than 1.5 g/L, conveniently 0.1 to 1.0 g/L. This can be achieved either by dilution, for example, with water after emulsion formation but before polymerization initiation. Alternatively, the desired concentration may be achieved by dilution, for example with water or a solution of a steric stabilizer after emulsion formation but before polymerization initiation. As a further alternative, the desired concentration may be realised by adding an appropriately diluted solution of steric stabilizer prior to emulsion formation.

During the uptake of the organic compound by the polymer seed particles, the temperature of the dispersion is preferably maintained between 20 and 50°C as precipitation may occur at lower temperatures and new particles may form at higher temperatures. Generally temperatures of 25°C + 2°C are preferred.

During this uptake phase the dispersion is preferably stirred. The time required for uptake is dependant on the seed diameter, the quantity and nature of the organic compound, the emulsion droplet size and the quantity and nature of surfactant and organic solvent. Generally a period of 1 to 5 days, more particularly 2 to 3 days, will be sufficient. Where the organic compound is an initiator it is important that uptake be at least substantially complete so as to avoid out-of-size particles.

The organic solvent concentration in the dispersion during organic compound uptake is conveniently 5 to 15% w/w.

The monomers and comonomers used in the process of the invention are preferably vinyl monomers (e.g. styrene), acrylic monomers and methacrylate monomers and monomers copolymerizable therewith, e.g. styrene, divinylbenzene (DVB), ethyl vinyl benzene, vinyl pyridine, amino-styrene, methyl-styrene, ethylene dimethacrylate, (EDMA), hydroxyethylmethacrylate (HEMA), methyl methacrylate (MMA), glycidyl methacrylate (GMA), vinyl benzyl chloride (VBC), vinylchloride (VC), dimethyl styrene, ethyl styrene, ethyl-methyl-styrene, p-chlorostyrene, 2,4-dichlorostyrene, acrylic acid, methyl acrylate, ethyl acrylate, butylacrylate, methacrylic acid, ethyl methylmethacrylate, maleic acid, maleic anhydride, dimethyl maleate, diethyl maleate, dibutyl maleate, fumaric acid, dimethyl fumarate, diethyl fumarate and acrylonitrile.

In the process of the invention the initial polymer seed, e.g. made by emulsion polymerization, is a polymer. Especially preferably, the initial polymer seed is a styrene homo or copolymer, e.g. a styrene homopolymer or a styrene-divinyl benzene copolymer. Most preferably, initial seeds prepared by emulsion polymerization will be homopolymers, especially polystyrene. Initial seeds prepared by other techniques, e.g. dispersion polymerization may be homopolymers or copolymers, and may be oligomeric or polymeric. Such seeds typically may be 1 to 10 $\mu$m in mode diameter and optionally may contain some crosslinker. Initial seeds used in this invention which are produced by emulsion polymerization, on the other hand, are typically of less than or equal to about 1 $\mu$m in diameter.

Intermediate seeds may be either polymer or oligomer seeds. Throughout this application, oligomer is intended to refer to polymers having low weight average molecular weight (for example up to 5000 Daltons, e.g. 1000 to 4000 D, especially 1500 to 3000 D), corresponding for example up to 50, more particularly 10 to 25 monomer units. Oligomer seeds have the advantage that their swelling capacity is generally much greater than that of the longer chain polymers.

For intermediate or larger sized seeds, e.g. having a mode particle diameter of about 1 $\mu$m or above before swelling, it may be desirable to incorporate a chain transfer agent, e.g. a halogenated alkane as described by Ugelstad in US-A-4186120. This has the advantage of producing a polymer with a bimodal molecular weight distribution in the polymerization stage. The lower molecular weight component results in the particles produced in that polymerization stage having a greater swelling capacity for subsequent swelling and polymerization.stages.

As an alternative to the use of a chain transfer agent, a high initiator concentration may be used in oligomer production. In this regard, the techniques of US-A-4530956 (Ugelstad) may be used.

It is also preferred to include a water-soluble polymerization inhibitor (e.g. potassium iodide) in the aqueous phase to prevent nucleation of particles.

Where a porous product is desired, then a porogen should be incorporated in the swollen seed particles, preferably in at least the final swelling and polymerization stage. As porogens can be used organic substances which are not polymerized in the polymerization stage and which can be removed from the particles after polymerization thereby producing porous particles. Porogens can also be used as blowing agents - particles impregnated with such materials, on heating may expand as the porogen vaporizes. Examples of suitable porogens include organic acids, alcohols, esters, aromatic solvents, optionally substituted aliphatic hydrocarbons having up to 12 carbons, e.g. toluene, cyclohexanol, butyl acetate, propane, pentane, cyclopentane, cyclobutane, heptane, methyl chloride, ethyl chloride, dichlorodifluoromethane, etc. Toluene and n-heptane are preferred, especially in a volume ratio of 1:10 to 10:1, more particularly 1:4 to 4:1. The porogen is conveniently introduced in admixture with the monomer.

By the use of a combination of porogens, at least one of which is a solvent for the polymer produced in the polymerization stage and at least one of which is a not a solvent for that polymer, it is possible to achieve a desired pore size distribution in the resulting porous particles. Thus for example for vinyl polymers (e.g. styrene) toluene can be used as a solvent porogen and n-heptane as a non-solvent porogen. The use of the term "solvent" in this specific context is not intended to convey that the swollen particles are capable of dissolving fully in this solvent, or that the swollen particles are incapable of dissolving to any extent whatsoever in the non-solvent porogen. Thus the combination of the two types of porogen enables the desired pore size distribution in the resulting porous particles to be achieved. This use of a porogen combination forms a further aspect of the invention. Viewed from this aspect the invention provides a process for the preparation of porous monodisperse polymer particles which process comprises:

    1) either

        (a) forming an aqueous dispersion comprising (i) monodisperse swellable seed polymer (or oligomer) particles, (ii) droplets comprising an organic compound (e.g. a polymerization initiator) with a molecular weight below 5000 Dalton and a water solubility at 25°C of less than $10^{-2}$g/L, (iii) an anionic surfactant, and, optionally, (iv) an organic solvent in which said organic compound is soluble;
        and (b) allowing said organic compound to diffuse into said seed particles,

or

(a) forming an aqueous dispersion comprising monodisperse swellable seed oligomer particles and preferably an anionic surfactant;

2) contacting the aqueous dispersion of seed particles with a monomer which, where said organic compound is present, is at least ten times more water soluble than said organic compound, and allowing said monomer to diffuse into said seed particles to form an aqueous dispersion of swollen seed particles and if required adding a water-soluble steric stabilizer, if required adding a porogen, and if required adding a polymerization initiator; and

3) initiating polymerization of said monomer in an aqueous dispersion of swollen seed particles, characterised in that said swollen seed particles contain at least two porogens, at least one of which is a solvent for the polymer produced in step (3) and at least one of which is not a solvent for the polymer produced in step (3).

In this aspect, the ratio with regard to increase in diameter is preferably greater than or equal to 4.5.

In general, a cross-linking monomer (such as divinylbenzene) can be used as 0 to 100% w/w of the monomer diffused into the seeds, for example as at least 30% for the production of porous particles and up to 0.5% for the production of very highly swellable particles.

In the preparation of porous particles and many other particles, it is necessary to include a crosslinking agent or alternatively to use as a monomer or comonomer a compound with more than one polymerization site, e.g. a compound with more than one polymerizable carbon-carbon double bond, for example a diene such as divinyl benzene, or compounds such as hexanediol dimethacrylate, trimethylol propane trimethacrylate and divinyl benzyl ether. Particularly desirably the monodisperse polymer particles produced according to the invention are 30 to 100% divinyl benzene, more especially 60 to 95%, particularly 70 to 90%, more particularly 75 to 82% (where the percentages are by weight of divinylbenzene monomer residue relative to the total monomer residue).

It has been found that the Ugelstad processes can be used particularly effectively to produce functionalized or functionalizable monodisperse particles where the monomer dispersed into the seeds in at least one swelling stage, preferably the final stage, comprises at least two acrylic or methacrylic acid or ester monomers, more preferably at least one being glycidyl methacrylate. Viewed from a further aspect therefore the invention provides a process for the preparation of monodisperse polymer particles which process comprises:

1) either

(a) forming an aqueous dispersion comprising (i) monodisperse swellable seed polymer (or oligomer) particles, (ii) droplets comprising an organic compound (e.g. a polymerization initiator) with a molecular weight below 5000 Dalton and a water solubility at 25°C of less than $10^{-2}$g/L, (iii) an anionic surfactant, and, optionally, (iv) an organic solvent in which said organic compound is soluble;

and (b) allowing said organic compound to diffuse into said seed particles;

or

(a) forming an aqueous dispersion comprising monodisperse swellable seed oligomer particles and preferably an anionic surfactant;

2) contacting the aqueous dispersion of seed particles with a monomer which, where said organic compound is present, is at least ten times more water soluble than said organic compound, and allowing said monomer to diffuse into said seed particles to form an aqueous dispersion of swollen seed particles and if required adding a water-soluble steric stabilizer, if required adding a porogen, and if required adding a polymerization initiator; and

3) initiating polymerization of said monomer in an aqueous dispersion of swollen seed particles, characterised in that said monomer comprises at least two acrylic or methacrylic acid or ester monomers, more preferably at least one being glycidyl methacrylate.

In this aspect, the ratio with regard to increase in diameter is preferably greater than or equal to 4.5.

Coefficient of variation (CV) is determined in percentage as

$$CV = \frac{100 \times standard\ deviation}{mean}$$

where mean is the mean particle diameter and standard deviation is the standard deviation in particle size. CV is preferably calculated on the main mode, ie. by fitting a monomodal distribution curve to the detected particle size distribution. Thus some particles below or above mode size may be discounted in the calculation which may for example be based on about 90%, more usually about 99% of total particle number (of detectable particles that is). Such a determination of CV is performable on a Coulter Counter Channelizer 256 particle size analyser.

Embodiments of the invention are illustrated further by the following non-limiting Examples:

## EXAMPLE 1

Porous crosslinked polystyrene particles, 30$\mu$m

1400g of water, 84g of dioctanoyl peroxide (DOP), 140g of acetone and 7g of sodium dodecyl sulphate (SDS) were homogenized in a two stage Manton Gaulin homogenizer with 380kg/cm$^2$ in the first stage and 100kg/cm$^2$ in the second stage for 8-9 min.

After homogenization 178.1g of the emulsion were charged with a seed suspension of monodisperse oligomeric styrene particles having a particle diameter of 5$\mu$m. There were used 21.9g of seed suspension containing 19.8g of water and 2.1g of oligomeric particles.

After stirring for 3 days at 25°C, 180.8g of the activated seed particles were charged with an emulsion containing 1683g of water, 0.6g of sodium dodecyl sulfate (SDS), 2.6g of Methocel K100 (HPMC=Hydroxy Propyl Methyl Cellulose), 117g of 80% divinylbenzene (DVB) [ie. 80% by weight DVB, 20% by weight ethyl vinyl benzene and other byproducts of DVB production], 223g of porogen (toluene:n-heptane in a 1:2 volume ratio). The emulsion was homogenized at 330kg/cm$^2$ in the first stage and 50kg/cm$^2$ in the second stage for 6-7 min.

After swelling for 15 hrs at 25°C, 5.3g of methocel K100 dissolved in 788g of water were charged to the reactor. The dispersion was then polymerized for 10 hrs at 70°C. A monodisperse suspension was formed having a particle diameter of 30$\mu$m.

The particles were separated from the liquid phase by flotation and the liquid phase was discharged. The particles were then cleaned with 2 litres of methanol by stirring for 1 hour followed by sedimentation. After sedimentation the liquid phase was discharged, new methanol (2 litres) was charged and the described procedure was repeated 4 times. The particle suspension was then sieved through a 100$\mu$m sieving cloth. Then the particle suspension was diafiltered with 6 litres of butylacetate followed by 6.7 litres of methanol. Finally the particles were cleaned by sedimentation and discharging of the liquid phase, with 2 litres of methanol minimum 3 times.

The final product was 30$\mu$m polymer particles in a clear liquid phase without impurities.

## EXAMPLE 2

Porous acrylic particles, 30$\mu$m

1400g of water, 84g of DOP, 140g of acetone and 7g of SDS were homogenized in a two stage Manton Gaulin homogenizer with 380kg/cm$^2$ in the first stage and 100kg/cm$^2$ in the second stage for 8-9 min.

After homogenization, 88.4g of the emulsion were charged with a seed suspension of monodisperse oligomeric styrene particles having a particle diameter of 5$\mu$m. There were used 9.6g of seed suspension containing 8.75g of water and 0.85g of oligomeric particles.

After stirring for 3 days at 25°C, 89g of the activated seed particles were charged with an emulsion containing 844g of water, 1,3g of Methocel K100, 44.9g of ethylene dimethylacrylate (EDMA), 11.4g of hydroxy ethyl methacrylate (HEMA), 113g of porogen (cyclohexanol: butylacetate in a 1:1 volume ratio). The mixture was emulsified with a Ultra Turrax at maximum speed for 10 min.

After swelling for 2 hrs at 25°C, 0.4g of potassium iodide (KI) dissolved in 395g of water were charged to the reactor and the dispersion was then polymerized for 1 hr at 50°C, 3 hrs at 60°C and 1 hr at 70°C. A monodisperse suspension was formed having a particle diameter of 30$\mu$m.

## EXAMPLE 3

Solid polystyrene particles, 20$\mu$m

1400g of water, 84g of DOP, 140g of acetone and 7g of SDS were homogenized in a two stage Manton Gaulin homogenizer with 380kg/cm$^2$ in the first stage and 100kg/cm$^2$ in the second stage for 8-9 min.

After homogenization 159g of the emulsion were charged with a seed suspension of monodisperse oligomeric styrene particles having a particle diameter of 5$\mu$m. There were used 43.9g of seed suspension containing 39.7g of water and 4.2g of oligomeric particles.

After stirring for 2 days at 25°C, 184.4g of the activated seed particles were charged with an emulsion containing 836g of water, 1.5g of Methocel K100, 348.8g styrene. The emulsion was homogenized at 400kg/cm$^2$ in the first stage and 100kg/cm$^2$ in the second stage for 4-5 min.

After swelling for 2 hrs at 25°C, 3g of Methocel K100 dissolved in 427g of water were charged to the reactor and then the dispersion was polymerized for 1 hr at 60°C and 9 hrs at 70°C. A monodisperse suspension was formed having a particle diameter of 20$\mu$m.

## EXAMPLE 4

**Solid crosslinked polystyrene particles, 54$\mu$m**

1400g of water, 42g of DOP, 222g of acetone and 7g of SDS were homogenized in a two stage Manton Gaulin homogenizer with 400kg/cm$^2$ in the first stage and 100kg/cm$^2$ in the second stage for 8-9 min.

After homogenization 159g of the emulsion were charged with a seed suspension of monodisperse oligomeric styrene particles having a particle diameter of 9.5$\mu$m. There were used 17.6g of the seed suspension containing 16.6g of water and 1g of oligomeric particles.

After stirring for 3 days at 25°C, 146.3g of the activated seed particles were charged with an emulsion containing 1198g of water, 2.5g of Methocel K100, 228g styrene, 7.3g 65% DVB. The emulsion was homogenized at 400kg/cm$^2$ in the first stage and 100kg/cm$^2$ in the sec-

ond stage for 5-6 min.

After swelling for 1 hour at 25°C, 0.5g of Methocel K100 and 0.5g KI dissolved in 500g of water were charged to the reactor and then the dispersion was polymerized for 1 hr at 60°C and 9 hrs at 70°C. A monodisperse particle suspension was formed having a particle diameter of 54$\mu$m.

EXAMPLE 5

Solid crosslinked polystyrene particles, 15$\mu$m

1400g of water, 84g of DOP, 140g of acetone and 7g of SDS were homogenized in a two stage Manton Gaulin homogenizer with 400kg/cm$^2$ in the first stage and 100kg/cm$^2$ in the second stage for 8-9 min.

After homogenization 75,8g of the emulsion were charged with a seed suspension of monodisperse oligomeric styrene particles having a particle diameter of 3.2$\mu$m. There were used 22g of the seed suspension containing 20g of water and 2g of oligomeric particles.

After stirring for 1 day at 25°C, 85g of the activated seed particles were charged with an emulsion containing 784g of water, 1.25g of SDS, 204.3g styrene, 0.37g of 80% DVB. The emulsion was homogenized at 400kg/cm$^2$ in the first stage and 100kg/cm$^2$ in the second stage for 4-5 min.

After swelling for 5 hrs at 25°C, 15g of PVP K90 (Poly Vinyl Pyrolidone) and 0.4g of potassium iodide dissolved in 702g of water were charged to the reactor and then the dispersion was polymerized for 1 hr at 60°C and 9 hrs at 70°C. A monodisperse suspension was formed having a particle diameter of 15$\mu$m.

EXAMPLE 6

Porous crosslinked polystyrene particles, 4.5$\mu$m

4970g of water, 248.5g of DOP and 24.85g of SDS were homogenized in a two stage Manton Gaulin homogenizer with 400kg/cm$^2$ in the first stage and 100kg/cm$^2$ in the second stage for 25 min.

After homogenization 3947.6g of the emulsion were charged with a seed suspension of monodisperse oligomeric styrene particles having a particle diameter of 1$\mu$m. There were used 1691.2g of the seed suspension containing 1555.2g of water and 136.0g of oligomeric particles.

After stirring for 20 hrs at 25°C, 5126.2g of the activated seed particles were charged with an emulsion containing 42576g of water, 26.47g of SDS, 536.5g of PVP K-30, 2989.7g of 62.5% DVB, 1991.7g of styrene and 4727.0g of porogen (toluene). The emulsion was homogenized at 380kg/cm$^2$ in the first stage and 100kg/cm$^2$ in the second stage for 30 min.

After swelling for 20 hrs at 25°C, 42026.4g of water were charged to the reactor and then the dispersion was polymerized for 1 hr at 60°C, 4 hrs at 70°C and 2.5 hrs at 80°C. A monodisperse suspension was formed having a particle diameter of 4.5$\mu$m.

EXAMPLE 7

Porous crosslinked polystyrene particles, 2.8$\mu$m

2630g of water, 214.4g of DOP, 291.9g of acetone and 14.73g of SDS were homogenized in a two stage Manton Gaulin homogenizer with 400kg/cm$^2$ in the first stage and 100kg/cm$^2$ in the second stage for 25 min.

After homogenization 2994.6g of the emulsion were charged with a seed suspension of monodisperse polystyrene particles having a particle diameter of 0.5$\mu$m. There were used 341.3g of seed suspension containing 290.4g of water and 50.9g of polymeric particles.

After stirring for 20 hrs at 25°C, 3032.6g of the activated seed particle suspension were charged with an emulsion containing 43375.1g of water, 31.42g of SDS, 1412.7g of PVP K-30, 2989.6g of 62.9% DVB, 1998.2g of styrene and 4780.7g of porogen (toluene). The emulsion was homogenized at 380kg/cm$^2$ in the first stage and 100kg/cm$^2$ in the second stage for 60 min.

After swelling for 20 hrs at 25°C, 42379.7g of water were charged to the reactor and then the dispersion was polymerized for 1 hr at 60°C, 4 hrs at 70°C and 2.5 hrs at 80°C. A monodisperse suspension was formed having a particle diameter of 2.8$\mu$m.

**EXAMPLE 8**

Porous crosslinked polystyrene particles, 2.6$\mu$m

1548g of water, 16g of PVP-K30, 2.4g SDS, 176.6g of 63% DVB, 44g of styrene, 204.6g of porogen (toluene) and 5.6g of 2,2'-azobis(2-methylbutyronitrile) (AMBN) were homogenized in a two stage Manton Gaulin homogenizer with 400kg/cm$^2$ in the first stage and 100kg/cm$^2$ in the second stage for 35 min.

After homogenization 1013.4g of the emulsion were charged with a seed suspension of monodisperse oligomeric styrene particles having a particle diameter of 0.65$\mu$m. There were used 40.4g of seed suspension containing 36.8g of water and 3.58g of oligomeric particles.

After swelling for 20 hrs at 25°C, 8g PVP K-30, and 0.8g of potassium iodide dissolved in 794g of water were charged to the reactor and then the dispersion was polymerized for 1, hr at 60°C, 4 hrs at 70°C and 2.5 hrs at 80°C. A monodisperse suspension was formed having a particle diameter of 2.6$\mu$m.

EXAMPLE 9

Preparation of initial seed particles, 0.5$\mu$m

280g styrene was extracted with 500ml 10 wt.% sodium hydroxide and then washed with water to pH7 and then flushed with argon for 10 min. In a 2L rector 1400g of water and 0.53g of borax were heated to 80°C, and 100g water was evaporated off to remove oxygen. Then 0.56g sodium decyl sulphate in 50ml boiled water was charged and stirred for 10 min, then the washed and substantially oxygen free styrene was charged and stirred for 15 min. Then 0.84g potassium peroxodisulphate was charged in 100ml boiled water. The mixture was kept at 80°C in an argon atmosphere for 13 hours. A monodisperse suspension of polymeric particles was formed having a particle diameter of 0.5$\mu$m.

EXAMPLE 10

Solid methacrylic particles with amine groups, 6$\mu$m

900g of water, 90g of DOP, 90g of acetone and 5.4g of SDS were homogenized in a two stage Manton Gaulin homogenizer with 380kg/cm$^2$ in the first stage and 100kg/cm$^2$ in the second stage for 6-7 min.

After homogenization 77.0g of the emulsion were charged with a seed suspension of monodisperse oligomeric styrene particles having a particle diameter of 1$\mu$m. There were used 14.5g of seed suspension containing 13.2g of water and 1.3g of oligomeric particles.

After stirring for 1 day at 25°C, 83,3g of the activated seed particles were charged with 864.6g of water, 2.0g of SDS, 158.9g of methyl methacrylate (MMA), 45.4g glycidyl methacrylate (GMA) and 22.7g ethylene glycoldimethacrylate (EDMA).

After swelling for 15 hrs at 25°C, 788g of water were charged to the reactor and then the dispersion was polymerized for 6 hrs at 70°C. Then 38.4g ethylenediamine were charged to the reactor and then reaction was allowed to proceed for 18 hrs. A monodisperse suspension was formed having a particle diameter of 6$\mu$m.

EXAMPLE 11

Core and shell particles, 10$\mu$m

Step 1

1200g of water, 120g of DOP, 240g of acetone and 7.2g of SDS were homogenized in a two stage Manton Gaulin homogenizer with 400kg/cm$^2$ in the first stage and 100kg/cm$^2$ in the second stage for 7-8 min.

After homogenization 83g of the emulsion were charged with a seed suspension of monodisperse polystyrene particles having a particle diameter of 2$\mu$m. There were used 7.9g of the seed suspension containing 6.5g of water and 1.4g of polymeric particles.

After stirring for 1 day at 25°C, acetone was removed by evaporation under vacuum and 71g of the activated seed particles were charged with 907g of water, 2.1g of SDS, 138.4g of methylstyrene, 34,6g of 55% DVB.

After swelling for 20 hrs at 25°C, 0.4g of KI dissolved in 647g of water were charged to the reactor and then polymerized for 5 hrs at 70°C (core). Then the batch was cooled down to 25°C.

Step 2

550g of the suspension of step 1 was taken and the aqueous was charged with 0.1g of Methocel J 75MS (Hydroxy Propyl Methyl Cellulose), 0.05g of KI and 0.1g of SDS dissolved in 230g of water. To this batch was added a mixture of 15.6g MMA, 12.5g of GMA and 3.1g of EDMA.

After stirring for 2 hrs at 25°C, the temperature was raised to 65°C for 1 hr and further to 70°C for 5 hrs. The final mixture was monodisperse and contained particles having a diameter of about 10$\mu$m.

EXAMPLE 12

Solid polystyrene particles with chlorine groups, 200$\mu$m

1370g of water, 82g of DOP, 205g of acetone and 8.2g of SDS were homogenized in a two stage Manton Gaulin homogenizer with 400kg/cm$^2$ in the first stage and 100kg/cm$^2$ in the second stage for 8-9 min.

After homogenization, 166g of the emulsion were charged with a seed suspension of monodisperse oligomeric styrene particles having a particle diameter of 71$\mu$m. There were used 79g of the seed suspension containing 71.2g of water and 7.8g of oligomeric particles.

After stirring for 2 days at 25°C, 222g of the activated seed particles were charged with an emulsion containing 1583g of water, 8.5g of Methocel K100, 124.4g styrene, 3g of 62.8% DVB, 58.5g of Vinyl Benzyl Chloride (VBC). The emulsion was homogenized at 400kg/cm$^2$ in the first stage and 100kg/cm$^2$ in the second stage for 5-6 min.

After swelling for 1 hr at 25°C, the temperature was raised to 60°C for 1 hr and further to 70°C for 10 hrs. A monodisperse suspension was formed having a particle diameter of 200$\mu$m.

EXAMPLE 13

Porous crosslinked polystyrene particles containing amine functionality, 30$\mu$m

1500g of water, 119g of bis(2-ethylhexyl)adipate, 152g of acetone and 8g of sodium dodecyl sulphate (SDS) were homogenized in a two stage Manton Gaulin homogenizer at 400kg/cm$^2$ in the first stage and 100kg/cm$^2$ in the second stage for 8-9 min.

After homogenization, 499g of the emulsion was charged with a seed suspension of monodisperse oligomeric styrene particles having a particle diameter of 5$\mu$m. 93g of a seed suspension containing 8g of oligomeric particles and 85g of water was used.

After stirring at 45°C for 1 day, 96.9g of the seed suspension containing activated seed particles were charged to 1097.7g of an emulsion containing 798.3g of water, 1.2g of Methocel K-100, 0.3g of sodium dodecyl sulphate 34.74g of 80% divinylbenzene (DVB) [i.e. 80% by weight DVB, 20% by weight ethyl vinyl benzene and other byproducts in DVB production], 52.8g of styrene, 4.2g of 2,2'-azobis(2-methylbutyronitrile) and 205.7g of toluene. The emulsion was homogenized at 400kg/cm$^2$ in the first stage and 100kg/cm$^2$ in the second stage for 8-9 min.

After swelling at 25°C for 0.5 hours, a mixture of 299.8g of water, 0.5g of Methocel K-100, O.lg of sodium dodecyl sulphate and 5.1g of 4-amino-styrene was charged and the swelling continued for additional 3 hours. 506.2g of water and 3.37g of Methocel K-100 were then charged to the reactor. The dispersion was then polymerized for 1 hour at 60°C and 17 hours at 70°C, yielding a suspension of particles having a diameter of 30$\mu$m.

The particles were cleaned as described in Example 1.

EXAMPLE 14

Porous crosslinked polystyrene particles containing amine functionality, 30$\mu$m

850g of water, 110.50g of bis(2-ethylhexyl)adipate, 141.95g of acetone and 4.25g of sodium dodecyl sulphate (SDS) were homogenized in a two stage Manton Gaulin homogenizer at 400kg/cm$^2$ in the first stage and 100kg/cm$^2$ in the second stage for 8-9 min.

After homogenization, 102.68g of the emulsion was charged with a seed suspension of monodisperse oligomeric styrene particles having a particle diameter of 5$\mu$m. 27.21g of seed suspension containing 1.71g of oligomeric particles and 26.2g of water was used.

After stirring at 45°C for 24 hours, 87.06g of the seed suspension containing activated seed particles were charged to 1436.08g of an emulsion containing 1035.84g of water, 1.58g of Methocel K-100, 0.5g of sodium dodecyl sulphate, 53.41g of 80% divinylbenzene (DVB) [i.e. 80% by weight DVB, 20% by weight ethyl vinyl benzene and other byproducts in DVB production], 56.07g of styrene, 6.71g of 2,2'-azobis(2-methylbutyronitrile), 269.41g of toluene and 12.56g of 4-amino-styrene. The emulsion was homogenized without addition of 4-amino-styrene at 400kg/cm$^2$ in the first stage and 100kg/cm$^2$ in the second stage for 8-9 min before the emulsion was mixed with 4-amino-styrene.

After swelling at 27°C for 1 hour, a mixture of 473.69g of water and 3.16g of Methocel K-100 was then charged to the reactor. The dispersion was then polymerized for 1 hour at 60°C and 10 hours at 70°C, yielding a suspension of particles having a diameter of 30$\mu$m.

The particles were cleaned as described in Example 1.

EXAMPLE 15

Crosslinked polystyrene particles containing amine functionality, 32 $\mu$m

1380g of water, 179g of bis(2-ethylhexyl)adipate, 230g of acetone and 7g of sodium dodecyl sulphate (SDS) were homogenized in a two stage Manton Gaulin homogenizer at 400 kg/cm$^3$ in the first stage and 100 kg/cm$^3$ in the second stage for 10-12 minutes.

After homogenization 292g of the emulsion was charged with a seed suspension of monodisperse oligomeric styrene particles having a particle diameter of 5 $\mu$m. 79g of seed suspension containing 7g of oligomeric particles and 72g of water was used.

After stirring at 45°C for 1 day, 52.5g of the seed suspension containing activated seed particles were charged to 850.5g of an emulsion containing 0.9g of Methocel K-100, 0.3g of sodium dodecyl sulphate (SDS), 2.1g of divinylbenzene (DVB) [i.e. 80% by weight DVB, 20% by weight ethyl vinyl benzene and other byproducts in DVB production], 174.1g of styrene, 58.7g of amino styrene, and 12.9g of 2,2'-azobis(2-methylbutyronitrile). The mixture was emulsified for 10 minutes by using an Ultra Turax mixer.

After swelling at 27°C for 1 hour, 281.6g of water and 1.9g of Methocel K-100 were charged to the reactor. The dispersion was then polymerized for 1 hour at 60°C and 10 hours at 70°C, yielding a suspension of particles having diameter of 32 $\mu$m.

The particles were cleaned as described in Example 1. Diameter was measured on particles dispersed in water, butylacetate and tetrahydrofuran respectively.

EXAMPLE 16

Crosslinked polystyrene particles containing amine functionality, 35 $\mu$m

1380g of water, 179g of bis(2-ethylhexyl)adipate, 230g of acetone and 7g of sodium dodecyl sulphate (SDS) were homogenized in a two stage Manton Gaulin homogenizer at 400 kg/cm$^3$ in the first stage and 100 kg/cm$^3$ in the second stage for 10-12 minutes.

After homogenization, 292g of the emulsion was charged with a seed suspension of monodisperse oligomeric styrene particles having a particle diameter of 5 $\mu$m. 79g of seed suspension containing 7g of oligomeric particles and 72g of water was used.

After stirring at 45°C for 1 day, 52.2g of the seed suspension containing activated seed particles were charged to 850.5g of an emulsion containing 0.9g of Methocel K-100, 0.3g of sodium dodecyl sulphate (SDS), 5.9g of divinylbenzene (DVB) [i.e. 80% by weight DVB, 20% by weight ethyl vinyl benzene and other byproducts in DVB production], 166.0g of styrene, 63.0g of amino styrene and 12.9g of 2,2'-azobis(2-methylbutyronitrile). The mixture was emulsified for 10 minutes by using an Ultra Turax mixer.

After swelling at 27°C for 1 hour, 281.6g of water and 1.9g of Methocel K-100 were charged to the reactor. The dispersion was then polymerized for 1 hour at 60°C and 10 hours at 70°C, yielding a suspension of particles having diameter of 35 $\mu$m.

The particles were cleaned as described in Example 1. Diameter was measured on particles dispersed in water, butyl acetate and tetrahydrofuran respectively.

EXAMPLE 17

Crosslinked polystyrene particles containing amine functionality, 35 $\mu$m

1380g of water, 179g of bis(2-ethylhexyl)adipate, 230g of acetone and 7g of sodium dodecyl sulphate (SDS) were homogenized in a two stage Manton Gaulin homogenizer at 400 kg/cm$^3$ in the first stage and 100 kg/cm$^3$ in the second stage for 10-12 minutes.

After homogenization, 292g of the emulsion was charged with a seed suspension of monodisperse oligomeric styrene particles having a particle diameter of 5 $\mu$m. 79g of seed suspension containing 7g of oligomeric particles and 72g of water was used.

After stirring at 45°C for 1 day, 52.2g of the seed suspension containing activated seed particles were charged to 850.5g of an emulsion containing 0.9g of Methocel K-100, 0.3g of sodium dodecyl sulphate (SDS), 8.8g of divinylbenzene (DVB) [i.e. 80% by weight DVB, 20% by weight ethyl vinyl benzene and other byproducts in DVB production], 167.3g of styrene, 58.7g of amino styrene, and 12.9g of 2,2'-azobis(2-methylbutyronitrile). The mixture was emulsified for 10 minutes by using an Ultra Turax mixer.

After swelling at 27°C for 1 hour, 281.6g of water and 1.9g of Methocel K-100 were charged to the reactor. The dispersion was then polymerized for 1 hour at 60°C and 10 hours at 70°C, yielding a suspension of particles having diameter of 35 $\mu$m.

The particles were cleaned as described in Example 1. Particle diameter was measured on particles dispersed in water, butyl acetate and tetrahydrofuran respectively.

Elemental analysis showed a content of 3.0 wt.% nitrogen and 0.38 wt.% oxygen.

EXAMPLE 18

Further functionalisation of amine-functionalised particles with carboxyl and amide functionality

5g of the particles produced in Example 17 in methanol were washed with dioxane (3 x 180 ml). 2.07g of succinic anhydride was added to the dioxane suspension (96g). The mixture was heated and mechanically stirred at 40°C for 3 hours. The particles were washed with dioxane (2 x 200 ml), methanol (100 ml) and dioxane (200 ml). Ir spectra showed a broad peak at 1750 to 1650 cm$^{-1}$ which indicates formation of both amide and carboxylic acid groups.

Elemental analysis of dried particles showed a content of 2.5 wt.% nitrogen and 9.3 wt. % oxygen. This indicates an amine conversion near 100%.

EXAMPLE 19

Further functionalisation of amine-functionalised particles with amide functionality 5g of the particles produced in Example 17 in methanol were washed with dioxane (3 x 180 ml). 4.23g of bromoacetic acid bromide and 3.0g diisopropylethylamine was added to the dioxane suspension (79g). The mixture was mechanically stirred at 20°C for 1 hour. The particles were washed with dioxane (2 x 150 ml), dioxane with 20% water and 1g diisopropylethylamine (150 ml) and dioxane (2 x 150 ml).

Ir spectra showed a peak at 1685 cm$^{-1}$ which indicates formation of amide groups.

Elemental analysis of dried particles showed a content of 13.2 wt% bromine indicating a conversion of 96%.

EXAMPLE 20

Porous crosslinked polystyrene particles, 5.0 $\mu$m

2020.0g of water, 202.0g of DOP, 202.0g of acetone and 10.10g of SDS were homogenized in a two stage Manton Gaulin homogenizer with 400 kg/cm$^2$ in the first stage and 100 kg/cm$^2$ in the second stage for 10 minutes.

After homogenization, 1429.3 g of the emulsion were charged with a seed suspension of monodisperse oligomeric styrene particles having particle diameter of 0.9 $\mu$m. There were used 372.8g of seed suspension containing 341.1g of water and 31.7g of oligomeric particles.

After stirring for 23 hours at 25°C, 581.3g of the activated seed suspension were charged with an emulsion containing 7053.9g of water, 18.0g of Methocel K-100, 883.0g of 80% divinylbenzene (DVB) [i.e. 80% by weight DVB, 20% by weight ethyl vinyl benzene and other byproducts in DVB production], 168.1 g of toluene and 525.6g of n-heptane. The emulsion was homogenized in a two stage Manton Gaulin homogenizer with 400 kg/cm$^2$ in the first stage and 100kg/cm$^2$ in the second stage for 30 minutes.

After swelling for 20 hrs at 25°C, 3234.2g of water and 35.9g of Methocel K-100 were charged to the reactor and then the dispersion was polymerized for 1 hour at 60°C and 10 hours at 70°C. A monodisperse suspension was formed having a particle diameter of 5 $\mu$m.

The particles were cleaned as described in Example 1.

**Claims**

1. A method of cleaning monodisperse polymer particles comprising contacting said monodisperse polymer particles with butyl acetate.

2. A method as claimed in claim 1 comprising washing or rinsing said particles with butyl acetate.

3. A method as claimed in claim 1 or claim 2 wherein linear polymers are removed.

4. A method as claimed in any preceding claim wherein the particles are produced by swelling a seed polymer or oligomer particle in aqueous dispersion and polymerizing a monomer within the swollen seed particles.

5. A method as claimed in claim 1, claim 2 or claim 3, wherein the particles are produced by a process comprising:

    1) either

        (a) forming an aqueous dispersion comprising (i) monodisperse swellable seed polymer (or oligomer) particles, (ii) droplets comprising an organic compound (e.g. a polymerization initiator) with a molecular weight below 5000 Dalton and a water solubility at 25°C of less than $10^{-2}$g/L, (iii) an anionic surfactant, and, optionally, (iv) an organic solvent in which said organic compound is soluble,
        and (b) allowing said organic compound to diffuse into said seed particles
        or (a) forming an aqueous dispersion comprising monodisperse swellable seed oligomer particles and preferably an anionic surfactant;

    2) contacting the aqueous dispersion of seed particles with a monomer which, where said organic compound is present, is at least ten times more water soluble than said organic compound, and if required a water-soluble steric stabilizer, if required a porogen, and if required a polymerization initiator, and allowing said monomer to diffuse into said seed particles to form an aqueous dispersion of swollen seed particles; and
    3) initiating polymerization of said monomer in an aqueous dispersion of swollen seed particles,
    where the mode diameter of said swollen particles is greater than 5 μm then the aqueous phase of said aqueous dispersion of swollen seed particles during polymerization further contains as a steric stabilizer a water soluble cellulose ether
    or in that where said mode diameter of said swollen particles is in the range 1 to 25 μm the aqueous phase of said aqueous dispersion of swollen seed particles during polymerization further contains as a steric stabilizer polyvinylpyrrolidone.

6. A method as claimed in claim 1, claim 2 or claim 3, wherein the particles are produced by a process comprising:

    1) either

        (a) forming an aqueous dispersion comprising (i) monodisperse swellable seed polymer (or oligomer) particles, (ii) droplets comprising an organic compound (e.g. a polymerization initiator) with a molecular weight below 5000 Dalton and a water solubility at 25°C of less than $10^{-2}$g/L, (iii) an anionic surfactant, and, optionally, (iv) an organic solvent in which said organic compound is soluble,
        and (b) allowing said organic compound to diffuse into said seed particles
        or (a) forming an aqueous dispersion comprising monodisperse swellable seed oligomer particles and preferably an anionic surfactant;

    2) contacting the aqueous dispersion of seed particles with a monomer which, where said organic compound is present, is at least ten times more water soluble than said organic compound, and allowing said monomer to diffuse into said seed particles to form an aqueous dispersion of swollen seed particles, and if required adding a water-soluble steric stabilizer, if required adding a porogen, and if require adding a polymerization initiator;
    3) initiating polymerization of said monomer in an aqueous dispersion of swollen seed particles,
    where the mode diameter of said swollen particles is greater than 5 μm then the aqueous phase of said aqueous dispersion of swollen seed particles during polymerization further contains as a steric stabilizer a water soluble cellulose ether
    or in that where said mode diameter of said swollen particles is in the range 1 to 25 μm the aqueous phase of said aqueous dispersion of swollen seed particles during polymerization further contains as a steric stabilizer polyvinylpyrrolidone.

7. A method as claimed in claim 5 or claim 6 wherein the polyvinylpyrrolidine has a weight average molecular weight of 10 to 2000 kD.

8. A method as claimed in any of claims 5 to 7 wherein a polyvinyl pyrrolidine is used as a steric stabilizer and the mode diameter of said swollen seed particles is up to 16 $\mu$m.

9. A method as claimed in claim 5 or claim 6 wherein, where the aqueous phase of said aqueous dispersion of swollen seed particles during polymerization further contains as a steric stabilizer a water soluble cellulose ether, the mode diameter of said swollen seed particles is greater than 15 $\mu$m.

10. A method as claimed in claim 5, claim 6 or claim 9 wherein a (hydroxy-$C_1$-$C_4$-alkyl)methyl cellulose is used as a said steric stabilizer, optionally wherein said (hydroxy-$C_1$-$C_4$-alkyl)methyl cellulose is Methocel K-100.

11. A method as claimed in claim 10 wherein a cellulose ether of molecular weight 10 to 100 kD is used as said steric stabilizer.

12. A method as claimed in claim 1, claim 2 or claim 3, wherein the particles are produced by a process comprising:

   1) either

      (a) forming an aqueous dispersion comprising (i) monodisperse swellable seed polymer (or oligomer) particles, (ii) droplets comprising an organic compound (e.g. a polymerization initiator) with a molecular weight below 5000 Dalton and a water solubility at 25°C of less than $10^{-2}$g/L, (iii) an anionic surfactant, and, optionally, (iv) an organic solvent in which said organic compound is soluble;
      and (b) allowing said organic compound to diffuse into said seed particles, or
      (a) forming an aqueous dispersion comprising monodisperse swellable seed oligomer particles and preferably an anionic surfactant;

   2) contacting the aqueous dispersion of seed particles with a monomer which, where said organic compound is present is at least ten times more water soluble than said organic compound, and allowing said monomer to diffuse into said seed particles to form an aqueous dispersion of swollen seed particles and if required adding a water-soluble steric stabilizer if required adding a porogen, and if required adding a polymerization initiator; and
   3) initiating polymerization of said monomer in an aqueous dispersion of swollen seed particles, **characterised in that** said swollen seed particles contain at least two porogens, at least one of which is a solvent for the polymer produced in step (3) and at least one of which is not a solvent for the polymer produced in step (3).

13. A method as claimed in claim 12 wherein said porogen comprises toluene and n-heptane.

14. A method as claimed in claim 1, claim 2 or claim 3, wherein the particles are produced by a process comprising:

   1) preparing monodisperse swellable seed particles by emulsion polymerization under substantially oxygen-free conditions;
   2) where said seed particles are non-oligomeric (and optionally where they are oligomeric), (a) contacting said seed particles with an aqueous dispersion comprising an organic compound (e.g. a polymerization initiator) with a molecular weight below 5000 Dalton and a water solubility at 25° of less than $10^{-2}$g/L, an anionic surfactant and, optionally an organic solvent in which said organic compound is soluble, and (b) allowing said organic compound to diffuse into said seed particles;
   3) contacting the aqueous dispersion of seed particles with a monomer which, where said organic compound is used, is at least ten times more water soluble than said organic compound and allowing said monomer to diffuse into said seed particles to form an aqueous dispersion of swollen seed particles, and if required adding a water-soluble steric stabilizer, if required adding a porogen, and if required adding a polymerization initiator; and
   4) initiating polymerization of said monomer in an aqueous dispersion containing a steric stabilizer in the continuous phase.

15. A method as claimed in claim 4, wherein the seed polymer particle is prepared by emulsion polymerisation under substantially oxygen free conditions with an oxygen content in the aqueous phase of between 0 and 5 ppm.

16. A method as claimed in claim 15, wherein the oxygen content in the aqueous phase is between 0 and 3 ppm, optionally between 0 and 2 ppm, further optionally between 0 and 1 ppm.

17. A method as claimed in any one of claims 5 to 16 wherein said monomer comprises at least 30% by weight divinyl benzene cross-linking monomer.

18. A method as claimed in any one of claims 5 to 17 wherein the monomer is a vinyl monomer or an acrylic monomer, said organic compound is a peroxide initiator, especially dioctanoyl peroxide.

19. A method as claimed in claim 1, claim 2 or claim 3, wherein the particles are produced by a process comprising:

   1) <u>either</u>

      (a) forming an aqueous dispersion comprising (i) monodisperse swellable seed polymer (or oligomer) particles, (ii) droplets comprising an organic compound (e.g. a polymerization initiator) with a molecular weight below 5000 Dalton and a water solubility at 25°C of less than $10^{-2}$g/L, (iii) an anionic surfactant, and, optionally, (iv) an organic solvent in which said organic compound is soluble;
      and (b) allowing said organic compound to diffuse into said seed particles, <u>or</u>
      (a) forming an aqueous dispersion comprising monodisperse swellable seed oligomer particles and preferably an anionic surfactant;

   2) contacting the aqueous dispersion of seed particles with a monomer which, where said organic compound is present is at least ten times more water soluble than said organic compound, and allowing said monomer to diffuse into said seed particles to form an aqueous dispersion of swollen seed particles and if required adding a water-soluble steric stabilizer if required adding a porogen, and if required adding a polymerization initiator; and
   3) initiating polymerization of said monomer in an aqueous dispersion of swollen seed particles, **characterised in that** said monomer comprises at least two acrylic or methacrylic acid or ester monomers, more preferably at least one being glycidyl methacrylate.

20. A method as claimed in any one of claims 5 to 9, 12 to 16 or 19 wherein the swollen particles have particle sizes below 5 μm and said anionic surfactant is sodium dodecyl sulphate.

21. A method as claimed in any one of claims 5 to 20 wherein glycidyl methacrylate is used as a said monomer.

22. A method as claimed in any one of claims 5 to 21 wherein, where the monomer is an amino-functionalized monomer (or where two or more monomers are used and one comonomer is an amino functionalized monomer), said organic compound, if present, is a non-initiator and a polymerization initiator is added after said seed particles have been swollen, optionally wherein said non-initiator is dioctyladipate.

23. A method as claimed in claim 22 wherein said polymerization initiator is 2,2'-azobis-(2-methylbutyronitrile) or azo-bis-dimethylvaleronitrile.

24. A method as claimed in any one of claims 5 to 23 wherein said monodisperse polymer particles are subsequently coated, derivatised, or have materials or catalysts bound to their surface or deposited in pores or on the surface, or they may be expanded.

**Patentansprüche**

1. Verfahren zum Reinigen von monodispersen Polymerteilchen, wobei das Verfahren das Kontaktieren der monodispersen Polymerteilchen mit Butylacetat umfasst.

2. Verfahren nach Anspruch 1, wobei das Verfahren Waschen oder Spülen der Teilchen mit Butylacetat umfasst.

3. Verfahren nach Anspruch 1 oder Anspruch 2, wobei lineare Polymere entfernt werden.

4. Verfahren nach einem der vorhergehenden Ansprüche, wobei die Teilchen durch Quellen eines Keimpolymer- oder Oligomerteilchens in wässriger Dispersion und Polymerisieren eines Monomers in den gequollenen Keimteilchen hergestellt werden.

5. Verfahren nach Anspruch 1, Anspruch 2 oder Anspruch 3, wobei die Teilchen durch ein Verfahren hergestellt werden, das Folgendes umfasst:

   1) entweder

      (a) Bilden einer wässrigen Dispersion, umfassend (i) monodisperse quellbare Keimpolymer- (oder Oligomer-) Teilchen, (ii) Tröpfchen, umfassend eine organische Verbindung (z.B. einen Polymerisationsinitiator) mit einer Molmasse unter 5000 Dalton und einer Wasserlöslichkeit bei 25 °C von weniger als $10^{-2}$g/l, (iii) ein anionisches Tensid und gegebenenfalls (iv) ein organisches Lösungsmittel, in dem die organische Verbindung löslich ist, und
      (b) Diffundierenlassen der organischen Verbindung in die Keimteilchen oder
      (a) Bilden einer wässrigen Dispersion, die monodisperse quellbare KeimOligomerteilchen und vorzugsweise ein anionisches Tensid umfasst;

2) Inkontaktbringen der wässrigen Dispersion von Keimteilchen mit einem Monomer, das, wenn die organische Verbindung vorhanden ist, mindestens zehnmal wasserlöslicher als die organische Verbindung ist, und gegebenenfalls mit einem wasserlöslichen sterischen Stabilisator, gegebenenfalls einem Porogen, und gegebenenfalls einem Polymerisationsinitiator, und Diffundierenlassen des Monomers in die Keimteilchen zum Bilden einer wässrigen Dispersion von gequollenen Keimteilchen; und

3) Initiieren der Polymerisation des Monomers in einer wässrigen Dispersion von gequollenen Keimteilchen, wenn der Modaldurchmesser der gequollenen Teilchen größer als 5 $\mu$m ist, dann die wässrige Phase der wässrigen Dispersion von gequollenen Keimteilchen während der Polymerisation weiterhin als sterischen Stabilisator einen wasserlöslichen Celluloseether darin enthält, oder dadurch, dass, wenn der Modaldurchmesser der gequollenen Teilchen im Bereich von 1 bis 25 $\mu$m liegt, die wässrige Phase der wässrigen Dispersion der gequollenen Keimteilchen während der Polymerisation weiterhin als sterischen Stabilisator Polyvinylpyrrolidon enthält.

6. Verfahren nach Anspruch 1, Anspruch 2 oder Anspruch 3, wobei die Teilchen durch ein Verfahren hergestellt werden, das Folgendes umfasst:

    1) entweder

        (a) Bilden einer wässrigen Dispersion, umfassend (i) monodisperse quellbare Keimpolymer- (oder Oligomer-) Teilchen, (ii) Tröpfchen, umfassend eine organische Verbindung (z. B. einen Polymerisationsinitiator) mit einer Molmasse unter 5000 Dalton und einer Wasserlöslichkeit bei 25 °C von weniger als $10^{-2}$ g/l, (iii) ein anionisches Tensid und gegebenenfalls (iv) ein organisches Lösungsmittel, in dem die organische Verbindung löslich ist, und (b) Diffundierenlassen der organischen Verbindung in die Keimteilchen, oder (a) Bilden einer wässrigen Dispersion, die monodisperse quellbare KeimOligomerteilchen und vorzugsweise ein anionisches Tensid umfasst;

    2) Inkontaktbringen der wässrigen Dispersion von Keimteilchen mit einem Monomer, das, wenn die organische Verbindung vorhanden ist, mindestens zehnmal wasserlöslicher ist als die organische Verbindung, und Diffundierenlassen von Monomer in die Keimteilchen zum Bilden einer wässrigen Dispersion von gequollenen Keimteilchen, und falls erforderlich, Hinzufügen von einem wasserlöslichen sterischen Stabilisator, gegebenenfalls Zugeben eines Porogens, und gegebenenfalls Zugeben eines Polymerisationsinitiators;

3) Initiieren der Polymerisation des Monomers in einer wässrigen Dispersion von gequollenen Keimteilchen, wenn der Modaldurchmesser der gequollenen Partikel größer als 5 $\mu$m ist, dann die wässrige Phase der wässrigen Dispersion von gequollenen Keimteilchen während der Polymerisation weiterhin als sterischen Stabilisator einen wasserlöslichen Celluloseether enthält oder dadurch, dass, wenn der Modaldurchmesser der gequollenen Teilchen im Bereich von 1 bis 25 $\mu$m liegt, die wässrige Phase der wässrigen Dispersion von gequollenen Keimteilchen während der Polymerisation weiterhin als sterischen Stabilisator Polyvinylpyrrolidon enthält.

7. Verfahren nach Anspruch 5 oder 6, wobei das Polyvinylpyrrolidin eine gewichtsgemittelte Molmasse von 10 bis 2000 kD aufweist.

8. Verfahren nach einem der Ansprüche 5 bis 7, wobei ein Polyvinylpyrrolidin als sterischer Stabilisator verwendet wird und der Modaldurchmesser der gequollenen Keimteilchen bis zu 16 $\mu$m beträgt.

9. Verfahren nach Anspruch 5 oder 6, wobei die wässrige Phase der wässrigen Dispersion von gequollenen Keimteilchen während der Polymerisation weiterhin als sterischen Stabilisator einen wasserlöslichen Celluloseether enthält, wobei der Modaldurchmesser der gequollenen Keimteilchen größer als 15 $\mu$m ist.

10. Verfahren nach Anspruch 5, Anspruch 6 oder Anspruch 9, wobei eine (Hydroxy-$C_1$-$C_4$-alkyl)-methylcellulose als sterischer Stabilisator verwendet wird, gegebenenfalls wobei die (Hydroxy-$C_1$-$C_4$-alkyl)-methylcellulose Methocel K-100 ist.

11. Verfahren nach Anspruch 10, wobei ein Celluloseether mit einer Molmasse von 10 bis 100 kD als sterischer Stabilisator verwendet wird.

12. Verfahren nach Anspruch 1, Anspruch 2 oder Anspruch 3, wobei die Teilchen durch ein Verfahren hergestellt werden, das Folgendes umfasst:

    1) entweder

        (a) Bilden einer wässrigen Dispersion, umfassend (i) monodisperse quellbare Keimpolymer- (oder Oligomer-) Teilchen, (ii) Tröpfchen, umfassend eine organische Verbindung (z. B. einen Polymerisationsinitiator) mit einer Molmasse von unter 5000 Dalton und einer Wasserlöslichkeit bei 25 °C von weniger als $10^{-2}$g/l, (iii) ein anionisches Tensid, und gegebenenfalls (iv) ein organisches Lösungsmittel, in dem die organische Verbindung löslich ist; und

(b) Diffundierenlassen der organischen Verbindung in die Keimteilchen, oder

(a) Bilden einer wässrigen Dispersion, die monodisperse quellbare Keimoligomerteilchen und vorzugsweise ein anionisches Tensid umfasst;

2) Inkontaktbringen der wässrigen Dispersion von Keimteilchen mit einem Monomer, das, wenn die organische Verbindung vorhanden ist, mindestens zehnmal wasserlöslicher als die organische Verbindung ist, und Diffundierenlassen des Monomers in die Keimteilchen zum Bilden einer wässrigen Dispersion von gequollenen Keimteilchen, und gegebenenfalls Zugeben eines wasserlöslichen sterischen Stabilisators, falls erforderlich, Zugeben eines Porogens und gegebenenfalls Zugeben eines Polymerisationsinitiators; und

3) Initiieren der Polymerisation des Monomers in einer wässrigen Dispersion von gequollenen Keimteilchen, **dadurch gekennzeichnet, dass** die gequollenen Keimteilchen wenigstens zwei Porogene enthalten, von denen wenigstens eines ein Lösungsmittel für das in Schritt (3) hergestellte Polymer ist und von denen mindestens eines kein Lösungsmittel für das in Schritt (3) hergestellte Polymer ist.

13. Verfahren nach Anspruch 12, wobei das Porogen Toluol und n-Heptan umfasst.

14. Verfahren nach Anspruch 1, Anspruch 2 oder Anspruch 3, wobei die Teilchen durch ein Verfahren hergestellt werden, das Folgendes umfasst:

1) Herstellen von monodispersen quellbaren Keimteilchen durch Emulsionspolymerisation unter im Wesentlichen sauerstofffreien Bedingungen;

2) wobei die Keimteilchen nicht oligomer sind (und gegebenenfalls, wenn sie oligomer sind), (a) Inkontaktbringen der Keimteilchen mit einer wässrigen Dispersion umfassend eine organische Verbindung (z. B. einen Polymerisationsinitiator) mit einer Molmasse unter 5000 Dalton und einer Wasserlöslichkeit bei 25 °C von weniger als $10^{-2}$g/l, ein anionisches Tensid und gegebenenfalls ein organisches Lösungsmittel, in dem die organische Verbindung löslich ist, und

(b) Diffundierenlassen der organischen Verbindung in die Keimteilchen;

3) Inkontaktbringen der wässrigen Dispersion von Keimpartikeln mit einem Monomer die, wenn die organische Verbindung verwendet wird, mindestens zehnmal wasserlöslicher ist als die organische Verbindung und es dem Monomer erlaubt, in die Keimteilchen zu diffundieren, um eine wässrige Dispersion von gequollenen Keimteilchen zu bilden, und, falls erforderlich, Zugeben eines wasserlöslichen sterischen Stabilisators, falls erforderlich, das Zugeben eines Porogens und falls erforderlich, das Zugeben eines Polymerisationsinitiators; und

4) Initiieren der Polymerisation des Monomers in einer wässrigen Dispersion, die einen sterischen Stabilisator in der kontinuierlichen Phase enthält.

15. Verfahren nach Anspruch 4, wobei das Keimpolymerteilchen durch Emulsionspolymerisation unter im Wesentlichen sauerstofffreien Bedingungen mit einem Sauerstoffgehalt in der wässrigen Phase zwischen 0 und 5 ppm hergestellt wird.

16. Verfahren nach Anspruch 15, wobei der Sauerstoffgehalt in der wässrigen Phase zwischen 0 und 3 ppm, gegebenenfalls zwischen 0 und 2 ppm, ferner gegebenenfalls zwischen 0 und 1 ppm liegt.

17. Verfahren nach einem der Ansprüche 5 bis 16, wobei das Monomer mindestens 30 Gew.- % Divinylbenzol-vernetzendes Monomer umfasst.

18. Verfahren nach einem der Ansprüche 5 bis 17, wobei das Monomer ein Vinylmonomer oder ein Acrylmonomer ist, wobei die organische Verbindung ein Peroxidinitiator ist, insbesondere Dioctanoylperoxid.

19. Verfahren nach Anspruch 1, Anspruch 2 oder Anspruch 3, wobei die Teilchen durch ein Verfahren hergestellt werden, das Folgendes umfasst:

1) entweder

(a) Bilden einer wässrigen Dispersion, umfassend (i) monodisperse quellbare Keimpolymer- (oder Oligomer-) Teilchen, (ii) Tröpfchen, umfassend eine organische Verbindung (z.B. einen Polymerisationsinitiator) mit einer Molmasse unter 5000 Dalton und einer Wasserlöslichkeit bei 25 °C von weniger als $10^{-2}$g/l, (iii) ein anionisches Tensid und gegebenenfalls (iv) ein organisches Lösungsmittel, in dem die organische Verbindung löslich ist; und

(b) Diffundierenlassen der organische Verbindung in die Keimteilchen, oder

(a) Bilden einer wässrigen Dispersion, die monodisperse quellbare Keimoligomerteilchen und vorzugsweise ein anionisches Tensid umfasst;

2) Inkontaktbringen der wässrigen Dispersion von Keimteilchen mit einem Monomer, das, wenn die organische Verbindung vorhanden ist, mindestens zehnmal wasserlöslicher als die organische Verbindung ist, und Diffundierenlassen des Monomer in die Keimteilchen, um eine wässrige Dispersion von gequollenen Keimteilchen zu bilden, und, falls erforderlich, einen wasserlöslichen sterischen Stabilisator, falls erforderlich, Zugeben eines Porogens und, falls erforderlich, Zugeben eines Polymerisationsinitiators; und

3) Initiieren der Polymerisation des Monomers in einer wässrigen Dispersion von gequollenen Keimteilchen, **dadurch gekennzeichnet, dass** das Monomer mindestens zwei Acryl- oder Methacrylsäure- oder Ester-Monomere umfasst, wobei mindestens eines davon Glycidylmethacrylat ist.

20. Verfahren nach einem der Ansprüche 5 bis 9, 12 bis 16 oder 19, wobei die gequollenen Teilchen Teilchengrößen unter 5 μm aufweisen und das anionische Tensid Natriumdodecylsulfat ist.

21. Verfahren nach einem der Ansprüche 5 bis 20, wobei Glycidylmethacrylat als Monomer verwendet wird.

22. Verfahren nach einem der Ansprüche 5 bis 21, wobei, wenn das Monomer ein aminofunktionalisiertes Monomer ist (oder wenn zwei oder mehr Monomere verwendet werden und ein Comonomer ein aminofunktionalisiertes Monomer ist), die organische Verbindung, falls vorhanden, ein Nicht-Initiator ist und ein Polymerisationsinitiator hinzugefügt wird, nachdem die Keimteilchen gequollen sind, wobei der Nicht-Initiator gegebenenfalls Dioctyladipat ist.

23. Verfahren nach Anspruch 22, wobei der Polymerisationsinitiator 2,2'-Azobis-(2-Methylbutyronitril) oder Azobis-Dimethylvaleronitril ist.

24. Verfahren nach einem der Ansprüche 5 bis 23, wobei die monodispersen Polymerteilchen anschließend beschichtet, derivatisiert werden oder Materialien oder Katalysatoren, an ihre Oberfläche gebunden, aufweisen oder in Poren oder auf der Oberfläche abgelagert sind, oder expandiert werden können.

**Revendications**

1. Procédé de nettoyage de particules polymères monodispersées comprenant la mise en contact desdites particules polymères monodispersées avec de l'acétate de butyle.

2. Procédé selon la revendication 1, comprenant le lavage ou le rinçage desdites particules avec de l'acétate de butyle.

3. Procédé selon la revendication 1 ou la revendication 2, dans lequel les polymères linéaires sont éliminés.

4. Procédé selon une quelconque revendication précédente, dans lequel les particules sont produites en gonflant une particule oligomère ou polymère germe en dispersion aqueuse et en polymérisant un monomère dans les particules germes gonflées.

5. Procédé selon la revendication 1, la revendication 2 ou la revendication 3, dans lequel les particules sont produites par un procédé comprenant :

1) soit

(a) la formation d'une dispersion aqueuse comprenant (i) des particules polymères (ou oligomères) germes pouvant gonfler monodispersées, (ii) des gouttelettes comprenant un composé organique (par exemple un initiateur de polymérisation) ayant un poids moléculaire inférieur à 5 000 Daltons et une solubilité dans l'eau à 25 °C inférieure à $10^{-2}$ g/L, (iii) un tensioactif anionique, et éventuellement (iv) un solvant organique dans lequel ledit composé organique est soluble,
et (b) le fait de permettre audit composé organique de se diffuser dans lesdites particules germes
soit (a) la formation d'une dispersion aqueuse comprenant des particules oligomères germes pouvant gonfler monodispersées et de préférence un tensioactif anionique ;

2) la mise en contact de la dispersion aqueuse de particules germes avec un monomère qui, lorsque ledit composé organique est présent, est au moins dix fois plus soluble dans l'eau que ledit composé organique, et si nécessaire un stabilisant stérique soluble dans l'eau, si nécessaire un porogène et si nécessaire un initiateur de polymérisation, et le fait de permettre audit monomère de se diffuser dans lesdites particules germes pour former une dispersion aqueuse de particules germes gonflées ; et
3) l'initiation de la polymérisation dudit monomère dans une dispersion aqueuse de particules germes gonflées,
où le diamètre de mode desdites particules gonflées est supérieur à 5 μm puis la phase aqueuse de ladite dispersion aqueuse de particules germes gonflées pendant la polymérisation contient en outre comme stabilisant stérique un éther de cellulose soluble dans l'eau

ou en ce que, lorsque ledit diamètre de mode desdites particules gonflées est compris entre 1 et 25 μm, la phase aqueuse de ladite dispersion aqueuse de particules germes gonflées pendant la polymérisation contient en outre comme stabilisant stérique la polyvinylpyrrolidone.

**6.** Procédé selon la revendication 1, la revendication 2 ou la revendication 3, dans lequel les particules sont produites par un procédé comprenant :

1) soit

(a) la formation d'une dispersion aqueuse comprenant (i) des particules polymères (ou oligomères) germes pouvant gonfler monodispersées, (ii) des gouttelettes comprenant un composé organique (par exemple un initiateur de polymérisation) ayant un poids moléculaire inférieur à 5 000 Daltons et une solubilité dans l'eau à 25 °C inférieure à 10$^{-2}$ g/L, (iii) un tensioactif anionique, et éventuellement (iv) un solvant organique dans lequel ledit composé organique est soluble,

et (b) le fait de permettre audit composé organique de se diffuser dans lesdites particules germes

soit (a) la formation d'une dispersion aqueuse comprenant des particules oligomères germes pouvant gonfler monodispersées et de préférence un tensioactif anionique ;

2) la mise en contact de la dispersion aqueuse de particules germes avec un monomère qui, lorsque ledit composé organique est présent, est au moins dix fois plus soluble dans l'eau que ledit composé organique, et le fait de permettre audit monomère de se diffuser dans lesdites particules germes pour former une dispersion aqueuse de particules germes gonflées, et si nécessaire l'ajout d'un stabilisant stérique soluble dans l'eau, si nécessaire l'ajout d'un porogène et si nécessaire l'ajout d'un initiateur de polymérisation ;

3) l'initiation de la polymérisation dudit monomère dans une dispersion aqueuse de particules germes gonflées,

où le diamètre de mode desdites particules gonflées est supérieur à 5 μm puis la phase aqueuse de ladite dispersion aqueuse de particules germes gonflées pendant la polymérisation contient en outre comme stabilisant stérique un éther de cellulose soluble dans l'eau

ou en ce que, lorsque ledit diamètre de mode desdites particules gonflées est compris entre 1 et 25 μm, la phase aqueuse de ladite dispersion aqueuse de particules germes gonflées pendant la polymérisation contient en outre comme stabilisant stérique la polyvinylpyrrolidone.

**7.** Procédé selon la revendication 5 ou la revendication 6, dans lequel la polyvinylpyrrolidine a un poids moléculaire moyen en poids de 10 à 2 000 kD.

**8.** Procédé selon l'une quelconque des revendications 5 à 7, dans lequel la polyvinylpyrrolidine est utilisée comme stabilisant stérique et le diamètre de mode desdites particules germes gonflées peut atteindre jusqu'à 16 μm.

**9.** Procédé selon la revendication 5 ou la revendication 6, dans lequel la phase aqueuse de ladite dispersion aqueuse de particules germes gonflées pendant la polymérisation contient en outre comme stabilisant stérique un éther de cellulose soluble dans l'eau, le diamètre de mode desdites particules germes gonflées est supérieur à 15 μm.

**10.** Procédé selon la revendication 5, la revendication 6 ou la revendication 9, dans lequel une (hydroxy-C$_1$-C$_4$-alkyl)méthylcellulose est utilisée comme stabilisant stérique, ladite (hydroxy-C$_1$-C$_4$-alkyl)méthylcellulose étant éventuellement le Methocel K-100.

**11.** Procédé selon la revendication 10, dans lequel un éther de cellulose ayant un poids moléculaire de 10 à 100 kD est utilisé comme stabilisant stérique.

**12.** Procédé selon la revendication 1, la revendication 2 ou la revendication 3, dans lequel les particules sont produites par un procédé comprenant :

1) soit

(a) la formation d'une dispersion aqueuse comprenant (i) des particules polymères (ou oligomères) germes pouvant gonfler monodispersées, (ii) des gouttelettes comprenant un composé organique (par exemple un initiateur de polymérisation) ayant un poids moléculaire inférieur à 5 000 Daltons et une solubilité dans l'eau à 25 °C inférieure à 10$^{-2}$ g/L, (iii) un tensioactif anionique, et éventuellement (iv) un solvant organique dans lequel ledit composé organique est soluble ;

et (b) le fait de permettre audit composé organique de se diffuser dans lesdites particules germes,

soit

(a) la formation d'une dispersion aqueuse comprenant des particules oligomères germes pouvant gonfler monodispersées et de préférence un tensioactif anionique ;

2) la mise en contact de la dispersion aqueuse de particules germes avec un monomère qui, lorsque ledit composé organique est présent, est au moins dix fois plus soluble dans l'eau que ledit composé organique, et le fait de permettre audit monomère de se diffuser dans lesdites particules germes pour former une dispersion aqueuse de particules germes gonflées et si nécessaire l'ajout d'un stabilisant stérique soluble dans l'eau, si nécessaire l'ajout d'un porogène et si nécessaire l'ajout d'un initiateur de polymérisation ; et

3) l'initiation de la polymérisation dudit monomère dans une dispersion aqueuse de particules germes gonflées, **caractérisé en ce que** lesdites particules germes gonflées contiennent au moins deux porogènes, dont au moins l'un est un solvant pour le polymère produit à l'étape (3) et dont au moins l'un n'est pas un solvant pour le polymère produit à l'étape (3).

13. Procédé selon la revendication 12, dans lequel ledit porogène comprend du toluène et du n-heptane.

14. Procédé selon la revendication 1, la revendication 2 ou la revendication 3, dans lequel les particules sont produites par un procédé comprenant :

1) la préparation de particules germes pouvant gonfler monodispersées par polymérisation en émulsion dans des conditions sensiblement exemptes d'oxygène ;
2) où lesdites particules germes sont non oligomères (et éventuellement lorsqu'elles sont oligomères), (a) la mise en contact desdites particules germes avec une dispersion aqueuse comprenant un composé organique (par exemple un initiateur de polymérisation) ayant un poids moléculaire inférieur à 5 000 Daltons et une solubilité dans l'eau à 25 °C inférieure à $10^{-2}$ g/L, un tensioactif anionique, et éventuellement un solvant organique dans lequel ledit composé organique est soluble, et (b) le fait de permettre audit composé organique de se diffuser dans lesdites particules germes ;
3) la mise en contact de la dispersion aqueuse de particules germes avec un monomère qui, lorsque ledit composé organique est utilisé, est au moins dix fois plus soluble dans l'eau que ledit composé organique et le fait de permettre audit monomère de se diffuser dans lesdites particules germes pour former une dispersion aqueuse de particules germes gonflées et si nécessaire l'ajout d'un stabilisant stérique soluble dans l'eau, si nécessaire l'ajout d'un porogène et si nécessaire l'ajout d'un initiateur de polymérisation ; et

4) l'initiation de la polymérisation dudit monomère dans une dispersion aqueuse contenant un stabilisant stérique dans la phase continue.

15. Procédé selon la revendication 4, dans lequel la particule polymère germe est préparée par polymérisation en émulsion dans des conditions sensiblement exemptes d'oxygène avec une teneur en oxygène dans la phase aqueuse comprise entre 0 et 5 ppm.

16. Procédé selon la revendication 15, dans lequel la teneur en oxygène dans la phase aqueuse est comprise entre 0 et 3 ppm, éventuellement entre 0 et 2 ppm, éventuellement encore entre 0 et 1 ppm.

17. Procédé selon l'une quelconque des revendications 5 à 16, dans lequel ledit monomère comprend au moins 30 % en poids de monomère de réticulation de divinylbenzène.

18. Procédé selon l'une quelconque des revendications 5 à 17, dans lequel le monomère est un monomère vinylique ou un monomère acrylique, ledit composé organique est un initiateur peroxyde, en particulier le peroxyde de dioctanoyle.

19. Procédé selon la revendication 1, la revendication 2 ou la revendication 3, dans lequel les particules sont produites par un procédé comprenant :

1) soit

(a) la formation d'une dispersion aqueuse comprenant (i) des particules polymères (ou oligomères) germes pouvant gonfler monodispersées, (ii) des gouttelettes comprenant un composé organique (par exemple un initiateur de polymérisation) ayant un poids moléculaire inférieur à 5 000 Daltons et une solubilité dans l'eau à 25 °C inférieure à $10^{-2}$ g/L, (iii) un tensioactif anionique, et éventuellement (iv) un solvant organique dans lequel ledit composé organique est soluble ;
et (b) le fait de permettre audit composé organique de se diffuser dans lesdites particules germes,
soit
(a) la formation d'une dispersion aqueuse comprenant des particules oligomères germes pouvant gonfler monodispersées et de préférence un tensioactif anionique ;

2) la mise en contact de la dispersion aqueuse de particules germes avec un monomère qui, lorsque ledit composé organique est présent, est au moins dix fois plus soluble dans l'eau que ledit composé organique, et le fait de permettre audit monomère de se diffuser dans lesdites particules germes pour former une dispersion aqueuse de particules germes gonflées et si nécessaire l'ajout d'un stabilisant stérique soluble dans l'eau, si nécessaire l'ajout d'un porogène et si nécessaire l'ajout d'un initiateur de polymérisation ; et

3) l'initiation de la polymérisation dudit monomère dans une dispersion aqueuse de particules germes gonflées, **caractérisé en ce que** ledit monomère comprend au moins deux monomères acides ou esters acryliques ou méthacryliques, plus préférablement l'un au moins étant un méthacrylate de glycidyle.

20. Procédé selon l'une quelconque des revendications 5 à 9, 12 à 16 ou 19, dans lequel les particules gonflées ont des tailles de particules inférieures à 5 μm et ledit tensioactif anionique est le dodécylsulfate de sodium.

21. Procédé selon l'une quelconque des revendications 5 à 20, dans lequel le méthacrylate de glycidyle est utilisé comme undit monomère.

22. Procédé selon l'une quelconque des revendications 5 à 21, dans lequel, lorsque le monomère est un monomère à fonctionnalité amino (ou lorsque deux monomères ou plus sont utilisés et qu'un comonomère est un monomère à fonctionnalité amino), ledit composé organique, s'il est présent, est un non-initiateur et un initiateur de polymérisation est ajouté après que lesdites particules germes ont été gonflées, ledit non-initiateur étant éventuellement le dioctyladipate.

23. Procédé selon la revendication 22, dans lequel ledit initiateur de polymérisation est le 2,2'-azobis-(2-méthylbutyronitrile) ou l'azo-bis-diméthylvaléronitrile.

24. Procédé selon l'une quelconque des revendications 5 à 23, dans lequel lesdites particules polymères monodispersées sont ensuite revêtues, dérivatisées ou ont des matériaux ou des catalyseurs liés à leur surface ou déposés dans les pores ou à la surface, ou peuvent être expansées.

Fig. 1

EP 1 564 227 B1

**EP 1 564 227 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3905 B
- US 4530956 A
- WO 9216581 A
- WO 9215681 A
- JP 61026505 B
- JP 56030405 B
- US 2673193 A
- US 4186120 A